# EUROPÄISCHE PATENTANMELDUNG

(11) **EP 0 569 809 A1**
(43) Veröffentlichungstag der Anmeldung: **18.11.1993**
(21) Anmeldenummer: 93107132.8
(22) Anmeldetag: 03.05.1993
(51) Int. Cl.: G02F 1/1335, C09K 19/40, C08G 77/04

(54) **Verfahren und Mittel zur disinklinationsfreien planaren Orientierung von chiralen flüssigkristallinen Seitenkettenpolymeren**

(30) Priorität: 13.05.1992 CH 1529/92
(71) Anmelder: F. HOFFMANN-LA ROCHE AG, CH-4002 Basel (CH); Consortium für elektrochemische Industrie GmbH, D-81379 München (DE)
(72) Erfinder: Buchecker, Richard, CH-8008 Zürich (CH); Herr, Rolf-Peter, W-7800 Freiburg (DE); Schadt, Martin, CH-4411 Seltisberg (CH); Maurer, Robert, W-8000 München (DE); Weitzel, Hans-Peter, W-8261 Reischach (DE)
(74) Vertreter: Buntz, Gerhard

(57) **Zusammenfassung**

In Schichten oder Folien aus chiralen flüssigkristallinen Seitenkettenpolymeren (3), wie sie beispielsweise für optische Filter oder Retarder verwendet werden, werden die bisher unvermeidlichen Störungen durch Disinklinationen dadurch beseitigt, dass die Schicht aus chiralem flüssigkristallinem Seitenkettenpolymer in seiner cholesterischen Phase einem zu ihr senkrecht gerichteten elektrischen Feld ausgesetzt wird.

## Beschreibung

Die Erfindung betrifft ein Verfahren zur disinklinationsfreien planaren Orientierung von chiralen flüssigkristallinen Seitenkettenpolymeren, Schichten aus disinklinationsfrei orientiertem chiralem flüssigkristallinem Seitenkettenpolymer, sowie mit diesen Schichten hergestellte Filter und Retarderfolien.

Für Anwendungen von chiralen flüssigkristallinen Seitenkettenpolymeren in optischen Bauelementen, insbesondere z.B. in optischen Filtern oder Retardern für sog. STN-Zellen, ist es notwendig, eine flüssigkristalline Polymerschicht einheitlich planar zu orientieren. Unter planar werden für den Zweck dieser Beschreibung sowohl zu den Schichtflächen parallele Molekülanordnungen verstanden, als auch solche, bei denen die Molküle einen sog. Kippwinkel von bis zu 30° einnehmen.

Bei der Herstellung solcher Schichten treten, verursacht z.B. durch Flussorientierung oder durch Abkühlung des flüssigkristallinen Seitenkettenpolymers aus der isotropen Phase, fokal-konische Disinklinationslinien auf. Diese Disinklinationslinien führen dazu, dass auftreffendes Licht gestreut wird. Ferner wird das gestreute Licht depolarisiert und führt dadurch zu einer Verschlechterung der optischen Eigenschaften der mit den chiralen flüssigkristallinen Seitenkettenpolymeren hergestellten Filtern, Retardern etc.(vgl. Jpn. J. Appl. Phys., Vol. 29, No.10, 1990, Seiten 1974-1984, speziell Seite 1975)

Der Erfindung liegt die Aufgabe zugrunde, derartige störende Disinklinationen in Schichten aus chiralen flüssigkristallinen Seitenkettenpolymeren zu vermeiden.

Erfindungsgemäss wird dies dadurch erreicht, dass eine Schicht aus chiralem flüssigkristallinem Seitenkettenpolymer mit negativer dielektrischer Anisotropie in dessen cholesterischer Phase einem zur ihr senkrecht gerichteten elektrischen Feld ausgesetzt und die durch das elektrische Feld induzierte Orientierung durch Abkühlen des Polymers unter dessen Glastemperatur fixiert wird.

Mit dem erfindungsgemässen Verfahren ist es überraschenderweise gelungen, Schichten aus chiralen flüssigkristallinen Seitenkettenpolymeren mit kleiner Ganghöhe über eine grosse Fläche derart einheitlich planar zu orientieren, dass im gesamten orientierten Gebiet praktisch keine Disinklinationslinien auftreten.

Weiterhin wurde gefunden, dass dies auch möglich ist, wenn die Schicht aus chiralen flüssigkristallinen Seitenkettenpolymeren zwischen Platten oder Begrenzungswänden angeordnet ist, von denen nur eine oder keine eine in eine Vorzugsrichtung ausrichtende Wandorientierung aufweist. Vor allem ist es auch möglich, diese Orientierung an Schichten vorzunehmen, die überhaupt nicht zwischen zwei Platten, sondern nur auf einem Substrat angeordnet sind. Dies ist besonders überraschend, weil solche Orientierungswirkungen auf beiden Seiten der Schicht bislang als unabdingbar betrachtet wurden.

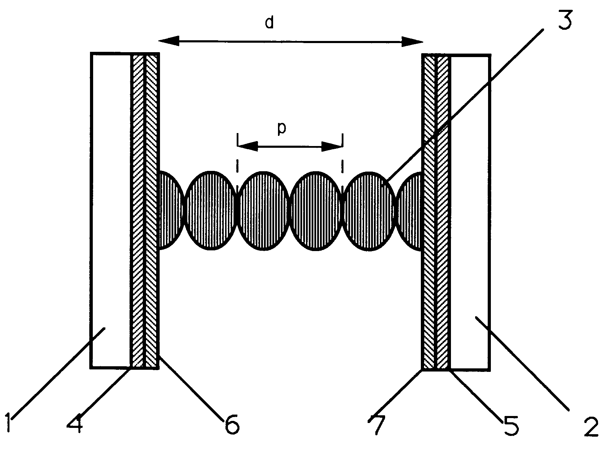

Im folgenden wird anhand der beiliegenden Zeichnung ein Ausführungsbeispiel der Erfindung beschrieben.

Die einzige Figur zeigt eine schematische Darstellung einer chiralen flüssigkristallinen Seitenkettenpolymerschicht zwischen zwei Platten im Schnitt. Solche Anordnungen sind beispielsweise aus dem oben erwähnten Artikel bekannt. Beim vorliegenden Ausführungsbeispiel handelt es sich um eine zwischen zwei planparallelen Glasplatten 1, 2 befindliche Schicht aus chiralen flüssigkristallinen Seitenkettenpolymeren 3 mit kleiner Ganghöhe p. Die Glasplatten weisen auf ihren der Schicht zugewandten Flächen die von Flüssigkristallanzeigen bekannten ITO-Beschichtungen 4, 5 auf. Diese ITO-Schichten sind im vorliegenden einfachsten Beispiel nicht wie bei Flüssigkristallanzeigen üblich segmentiert. Sie können aber für spezielle Anwendungen auch segmentiert sein. Der Abstand der Glasplatten ist mit Hilfe von sog. Spacern auf ca. 8 µm eingestellt, wobei der Plattenabstand nicht kritisch ist.

Die gemäss der vorliegenden Erfindung orientierbaren chiralen LC-Seitenkettenpolymere zeichnen sich dadurch aus, dass ihre flüssigkristalline(n) Seitenkette(n) folgende Funktionen induzieren: 1. Chiralität, 2. eine cholesterische Phase oberhalb der Glastemperatur des Polymers und 3. eine negative dielektrische Anisotropie. Diese drei Eigenschaften können gemeinsam in einem einzigen Seitenkettenmonomertyp vereinigt sein, oder aber auf verschiedene Seitenkettenmonomertypen verteilt werden. In letzterem Fall handelt es sich um ein flüssigkristallines Seitenketten-Copolymer.

Als Monomerbausteine kommen generell zwei Typen in Frage, nämlich entweder solche, die endständig mit der polymerisierbaren Funktion verbunden sind oder solche, bei denen der zentrale Teil ca. in der Mitte mit der polymerisierbaren Funktion verknüpft ist.

Ein besonders geeignetes Beispiel eines chiralen flüssigkristallinen Seitenkettenpolymers ist eine Verbindung der Formel I 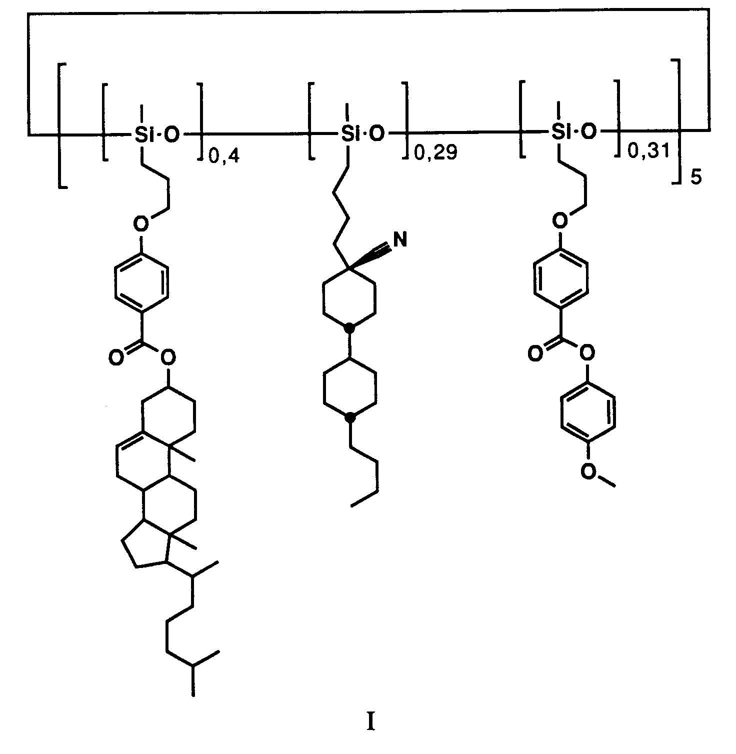
Diese Verbindung wurde wie folgt hergestellt:
1,19g (2,18 mmol) 4-Allyloxybenzoesäurecholesterinester,
0,48g (1,69mmol) 4-Allyloxybenzoesäure(4-methoxy)phenylester,
0,5g (1,58mmol) 1-(3-Butenyl)-4α-(trans-4-pentylcyclohexyl)-1ß-cyclohexancarbonitril und
0,33g (1,09mmol) Cyclisches Siloxan mit 5-OSi(CH3)H-Einheiten
wurden in 6ml trockenem Toluol unter Argonatmosphäre vorgelegt und auf 60°C erwärmt; nach Zugabe von 0,03 ml Platindicyclopentadiendichlorid (1Gew. % in CH₂Cl₂) als Katalysator wurde 2 Stunden auf 100°C erwärmt.

Zur Aufarbeitung wurde die Lösung eingedampft, der Rückstand in THF aufgenommen und der Katalysator durch Filtration über eine Kieselgelsäule (1=4cm, Ø=3cm) abgetrennt. Kieselgelreste wurden durch Filtration über einen Mikroporenfilter (2µm) beseitigt. Der Restmonomergehalt des erhaltenen Produktes betrug etwa 9%. Zur Abtrennung von Restmonomeren -falls notwendig- kann das Rohprodukt aus THF in Ethanol umgefällt werden.

Die Ausbeute betrug 2,0g (80%).

Bei den verwendeten Monomeren für diese LC-Seitenkettenpolymere können die Mesogene sowohl über eine der beiden Flügelgruppen als Spacer mit der polymerisierbaren Funktion bzw. Polymerkette verbunden sein, oder über einen gesonderten Spacer, der seitlich mit dem Mesogen chemisch verbunden ist. Es können auch beide Monomertypen innerhalb eines LC-Copolymere verwendet werden. 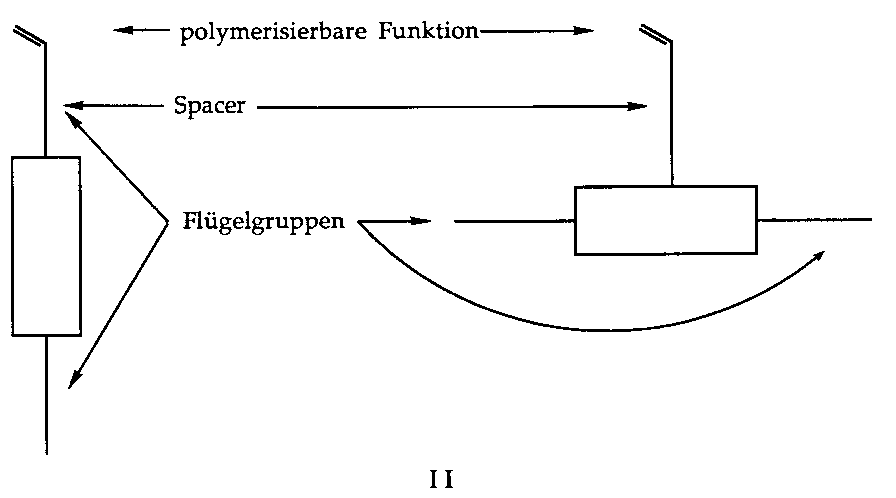
Die Polymere, Copolymere, linearen oder cyclischen Oligomere können durch folgende Polymerbausteine aufgebaut sein: 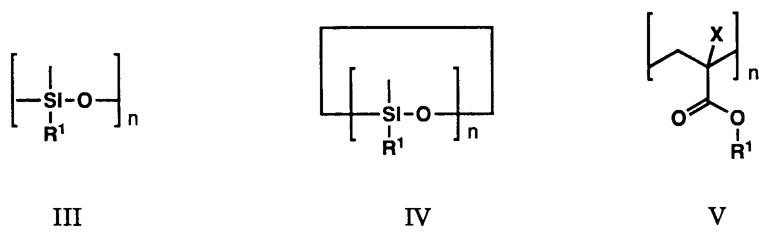 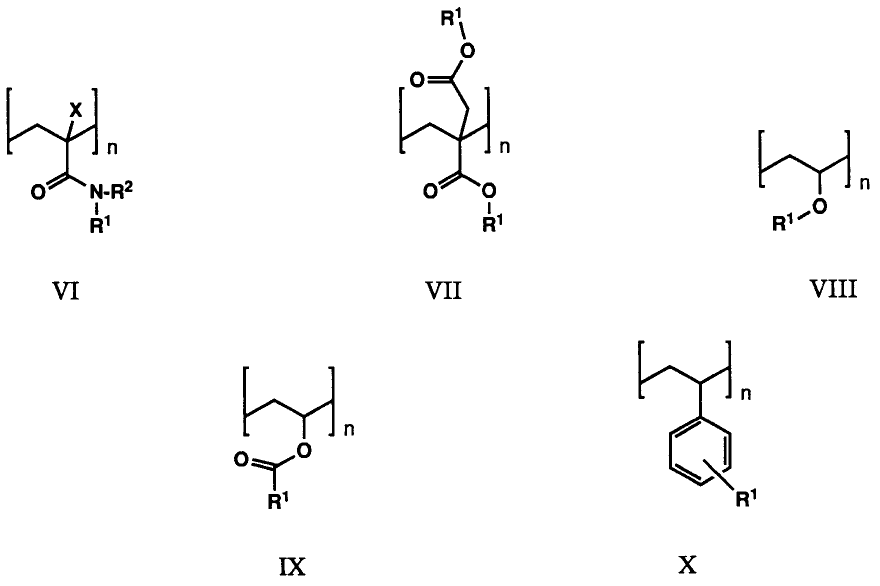
wobei
- X=: H (Polyacrylat) CH₃(Polymethacrylat) Cl(Poly-α-chloracrylat)
- R¹ =: mesogener Rest
- R² =: H oder Niederalkyl
Diese einzelnen Monomere können zu Copolymeren umgesetzt werden, wobei Monomere mit gleichen polymerisierbaren Funktionen (Copolymere mit reiner Polymethacrylatkette und unterschiedlichen Seitenketten) oder unterschiedlichen polymerisierbaren Funktionen (z.B.: Copolymere aus Styrolderivaten und Methacrylaten mit unterschiedlichen Seitenketten) gemäss Stand der Technik auf dem Gebiet der Copolymerisation entsprechend substituierter Monomerbausteine eingesetzt werden können.

Die für die Zelle verwendeten ITO-beschichteten Glasplatten 1, 2 können eine spezielle Orientierungsschicht 6, 7 aufweisen, die die Polymermoleküle in eine Vorzugsorientierung parallel zur Plattenoberfläche oder unter einem bestimmten Kippwinkel zu ihr ausrichtet.

Zur Orientierung wurde das Polymer wie erwähnt zwischen zwei ITO-beschichteten, mit parallelen Orientierungsschichten versehenen Glasplatten auf 80°C (Glastemperatur T_{g} = 19°C) erwärmt. Durch Anlegen einer 300Hz Wechselspannung von 100 Volt an die d=8µm dicke Polymerschicht während einiger Minuten wurde der cholesterische Film planar orientiert. Durch Abkühlen im elektrischen Feld unter T_{g} wurde die planare Orientierung fixiert. Der cholesterisch-isotrope Phasenübergang des Seitenkettenpolymers gemäss Formel I liegt bei T_{c} = 165° C. Die cholesterische Phase (induziert durch den Seitenketten-Cholesterinester) ist linksdrehend. Die Wellenlänge der selektiven Reflexion des Seitenkettenpolymers gemäss Formel I liegt bei 503 nm. Die drei verschiedenen Seitenkettenmonomere haben folgende Funktionen: 4-Allyloxybenzoesäurecholesterinester induziert eine linksdrehende cholesterische Phase; 4-Allyloxybenzoesäure(4-methoxy)phenylester unterstützt die flüssigkristallinen Eigenschaften des LC-Seitenketten Copolymers; 1-(3-Butenyl)-4α-(trans-4-pentylcyclohexyl)-1ß-cyclohexancarbonitril induziert die negativ dielektrische Anisotropie.

Wenn die Orientierung im Glaszustand fixiert ist, bleibt sie auch nach Abschalten der Spannung bestehen und ist auf Dauer stabil.

Anstatt die Platten mit ITO-Schichten zu versehen und eine Spannung an diese anzulegen, ist es auch möglich die Polymerschicht für die erforderliche Zeit in ein ausserhalb von ihr, beispielsweise in Form einer Coronaentladung, erzeugtes elektrisches Feld zu bringen bzw. durch ein solches Feld laufen zu lassen.

In Flüssigkristallanzeigen mit hochverdrillten nematischen Flüssigkristallen, den sog. Supertwist-LCDs, werden bekanntlich zur Vermeidung der unerwünschten Färbung im ausgeschalteten Zustand Kompensationsschichten eingesetzt. Ueblicherweise handelt es sich bei einer solchen Kompensationsschicht um eine zusätzliche hochverdrillte TN-Schicht, die eine dritte Begrenzungswand mit den entsprechenden Orientierungsschichten erfordert, allerdings ohne Elektrodenbeschichtung. Diese herstellungstechnisch sehr aufwendige Lösung kann durch planar orientierte chirale flüssigkristalline Polymerfolien ersetzt werden, die gemäss der Erfindung hergestellt sind und auf die eigentliche Anzeigezelle aufgeklebt werden.

## Patentansprüche

1. Verfahren zur disinklinationsfreien planaren Orientierung von chiralen flüssigkristalline Seitenkettenpolymeren dadurch gekennzeichnet, dass eine Schicht aus chiralem flüssigkristallinem Seitenkettenpolymer (3) mit negativer dielektrischer Anisotropie in dessen cholesterischer Phase einem zur ihr senkrecht gerichteten elektrischen Feld ausgesetzt und die durch das elektrische Feld induzierte Orientierung durch Abkühlen des Polymers unter dessen Glastemperatur fixiert wird.

2. Optisches Bauelement mit einer Schicht aus planar orientiertem flüssigkristallinem Seitenkettenpolymer, dadurch gekennzeichnet, dass die Schicht frei von Disinklinationslinien ist.

3. Optisches Bauelement nach Anspruch 2, dadurch gekennzeichnet, dass die Schicht zwischen zwei mit planaren Wandorientierungsschichten versehenen Substraten angeordnet ist.

4. Optisches Bauelement nach Anspruch 2, dadurch gekennzeichnet, dass die Schicht an ein mit einer planaren Wandorientierungsschicht versehenes Substrat grenzt.

5. Optisches Bauelement nach einem der Ansprüche 3 und 4, gekennzeichnet durch ggf. segmentierte Elektroden auf den Substraten zum Anlegen eines orientierenden elektrischen Feldes.
